# EUROPEAN PATENT SPECIFICATION

(11) **EP 3 659 009 B1**
(45) Date of publication and mention of the grant of the patent: **05.04.2023**
(21) Application number: 17919225.7
(22) Date of filing: 28.07.2017
(51) Int. Cl.: G06F 1/26

(54) **SMART BATTERY BACKUP SYSTEM TO INCREASE RACK DENSITY OF IDC**
INTELLIGENTES BATTERIESICHERUNGSSYSTEM ZUR ERHÖHUNG DER RACKDICHTE VON IDC
SYSTÈME DE SAUVEGARDE DE PILE INTELLIGENT POUR AUGMENTER LA DENSITÉ DE BAIES D'IDC

(43) Date of publication of application: 03.06.2020
(73) Proprietor: Intel Corporation, Santa Clara, CA 95054 (US)
(72) Inventor: SONG, Chuan, Shanghai 201615 (CN); LIANG, Xiaoguo, Shanghai 31 200241 (CN); ZHOU, Xiang, Shanghai 31 200241 (CN); SHU, Wenhui, Shanghai 31 200240 (CN); UAN-ZO-LI, Alexander B., Hillsboro, Oregon 97124 (US); HUO, Sixiao, Shanghai 31 200241 (CN)
(74) Representative: HGF
(86) International application number: PCT/CN2017/094941
(87) International publication number: WO 2019/019163

(56) References cited:
- CN-A- 102 360 243
- CN-A- 104 917 286
- CN-A- 105 098 965
- US-A1- 2011 304 211
- US-A1- 2014 310 537
- US-A1- 2015 177 808
- US-A1- 2017 074 946
- US-A1- 2017 097 667
- US-B1- 9 377 832

## Description

### TECHNICAL FIELD OF THE INVENTION

Various embodiments of the invention pertain to battery backup systems for Internet Data Centers (IDC), with a particular emphasis on increasing rack density by managing power control.

### BACKGROUND

The growth of very large data centers has resulted in so-called 'server farms' which may contain thousands or tens of thousands of servers. To make efficient use of space, the servers are typically arranged in standardized 19" wide racks, each rack housing multiple servers, with many racks in a room or building. The installed base of server racks is already enormous, with hundreds of thousands, or possibly millions of racks in place. Each rack may be limited to a defined peak power because of its power budget set from the IDC level. IDC upgrade progress is far behind that of the servers and racks, so that many of today's racks still have to be deployed in IDCs that were built years ago with the limitations of that era. Utilization of the rack space is typically low because the racks themselves, and the grid power allocated to each rack by the IDC, were designed in a previous era with earlier technology. Further, the servers may require extra power (beyond their long-term steady state value) that lasts for time periods from several minutes to several hours. Covering this need by providing increased grid power to the racks is impractical because of the very large installed base of power sources and racks and other existing infrastructure in an IDC.

Within a rack, the allocated power may typically be large enough to handle temporary surges in power (above the average power consumption) demanded by the servers in that rack, as long as those surges don't last more than a defined period of time. Exceeding this defined period of time may cause harmful results, such as emergency computer shutdown or even thermal damage. Therefore, the number of servers in the rack may be intentionally kept low to avoid overstressing the power system when extra power is demanded by the servers.

Battery backup systems (BBS) are typically used to provide an Uninterruptable Power Supply (UPS) function, where the battery is used to provide power only when the main power source is lost (for example, failure of grid power to a building housing a server farm). In such cases, the BBS may be kept fully charged while grid power is available, to maximize the length of time the BBS can subsequently survive a grid outage. However, the BBS typically does not supplement the grid power when the grid power is available.

Document US 20170097667 discloses techniques to enable power manipulation within a data center based on limits for power consumption, power generation, and other criteria.

Document US 20110304211 discloses a rack power unit configured to be inserted into a device rack of a data center.

Document US 20140310537 discloses a method that budgets power allocation for an information handling system (HIS).

Document US 9377832 discloses a server rack comprising a battery string connected to a controller and rectifier.

### BRIEF DESCRIPTION OF THE DRAWINGS

Some embodiments of the invention may be better understood by referring to the following description and accompanying drawings that are used to illustrate embodiments of the invention. In the drawings:
Fig. 1 shows an embodiment of a prior art server rack.
Fig. 2 shows a chart of exemplary power consumption in the rack of Fig.1, according to an embodiment.
Fig. 3 shows a rack with a backup battery system (BBS), according to an embodiment of the invention.
Figs. 4A and 4B show a flow diagram of a method of controlling total rack input power, according to an embodiment of the invention.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure an understanding of this description.

References to "one embodiment", "an embodiment", "example embodiment", "various embodiments", etc., indicate that the embodiment(s) of the invention so described may include particular features, structures, or characteristics, but not every embodiment necessarily includes the particular features, structures, or characteristics. Further, some embodiments may have some, all, or none of the features described for other embodiments.

In the following description and claims, the terms "coupled" and "connected," along with their derivatives, may be used. It should be understood that these terms are not intended as synonyms for each other. Rather, in particular embodiments, "connected" is used to indicate that two or more elements are in direct physical or electrical contact with each other. "Coupled" is used to indicate that two or more elements co-operate or interact with each other, but they may or may not have intervening physical or electrical components between them.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

Various embodiments of the invention may be implemented fully or partially in software and/or firmware. This software and/or firmware may take the form of instructions contained in or on a non-transitory computer-readable storage medium. The instructions may be read and executed by the one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM), random access memory (RAM), magnetic disk storage media, optical storage media, a flash memory, etc.

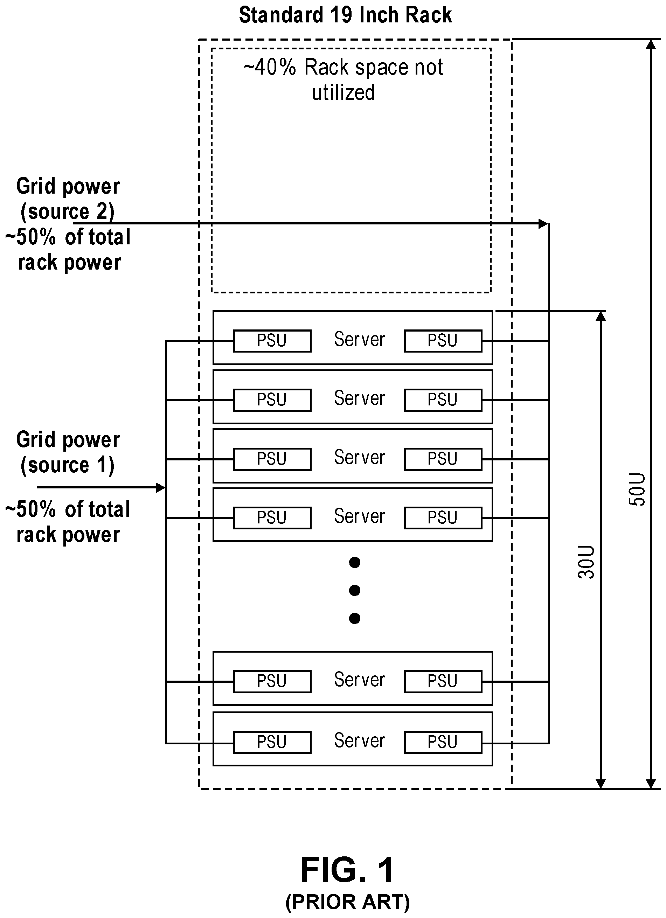

For reference, Fig. 1 shows a typical prior art server rack. Although considered prior art, it is shown in this Detailed Description section because it forms the basis for the various embodiments of the invention that are subsequently described. The illustrated rack is shown with a 19 inch horizontal dimension, which has been common in the computer world for decades, but other dimensions may be used. The rack is also shown with a total of 50 units of vertical mounting space in which to mount the servers, but other vertical dimensions may be used. For redundancy, each server is shown with two power supply units (PSU), with each PSU being energized from a separate grid power source (source 1 or source 2). This permits a server to continue operating in the event that one of the PSUs, or the grid power source that powers it, should fail. In a typical configuration, each PSU can supply the server with sufficient power to operate when the other PSU fails. But without such failures, each PSU may supply approximately half the power needed by the server, and the server or PSUs may contain circuitry to balance the load in this manner.

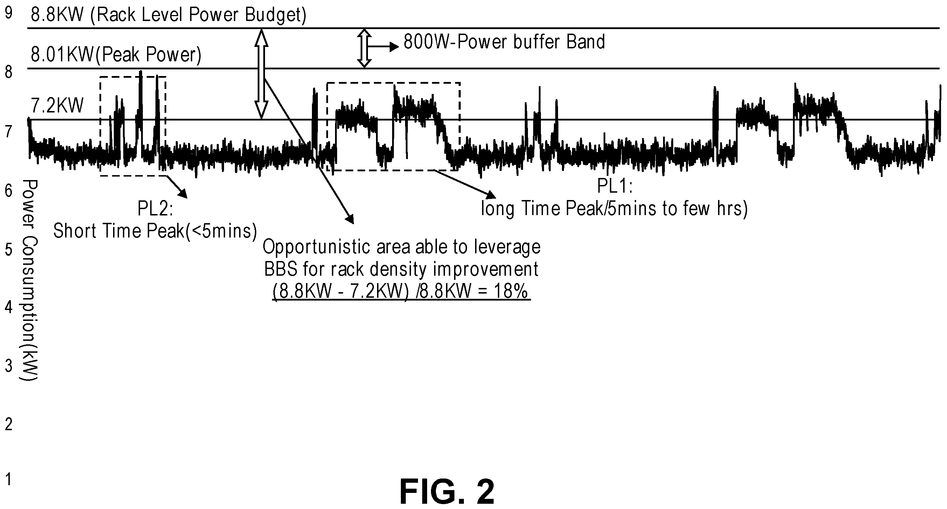

The rack of Fig. 1 only contains 60% as many servers as the rack has space for, which has been a typical configuration in prior art server farms. The reason for this significant waste of space may be seen in Fig. 2.

Fig. 2 shows a chart of exemplary power consumption in the rack of Fig. 1, according to an embodiment. The particular rack of this example has a maximum power rating of 8.8 kilowatts (kW), with a short term power rating (e.g., less than 5 minutes) of 8.0 kW, and a long term power rating (e.g., longer than 5 minutes and even up to a few hours) of 7.2 kW. The steady state power consumption is shown at around 6.5 kW. Considering the possible tolerance of consumed power from each component in the servers and rack,(e.g., CPU, DDR, HDD, etc.), there may not be an easy way to prevent short term peak demands from exceeding their expected range. Therefore a buffer band of 0.8 kW is shown in this example to keep short term peak demands from inadvertently exceeding the maximum power rating of the rack. This may limit the practical peak power of the rack in this example to 8.0 kW.

In the example shown, short term peak load by the servers may add approximately 1.5 kW to the steady-state demand on the PSUs. Similarly, long term peak load by the servers may add approximately 0.7 kW to the steady-state demand on the PSUs. These two factors, combined with the 0.8 kW buffer band, result in a maximum of only 6.5 kW stead state power consumption for all servers in the rack, even though the rack itself may be rated at 8.8 kW. This also indicates how short term peak power may be a key factor in limiting deployment of more servers in a rack. Thus, the number of servers in the rack may be significantly limited to much less than the physical space available for those servers.

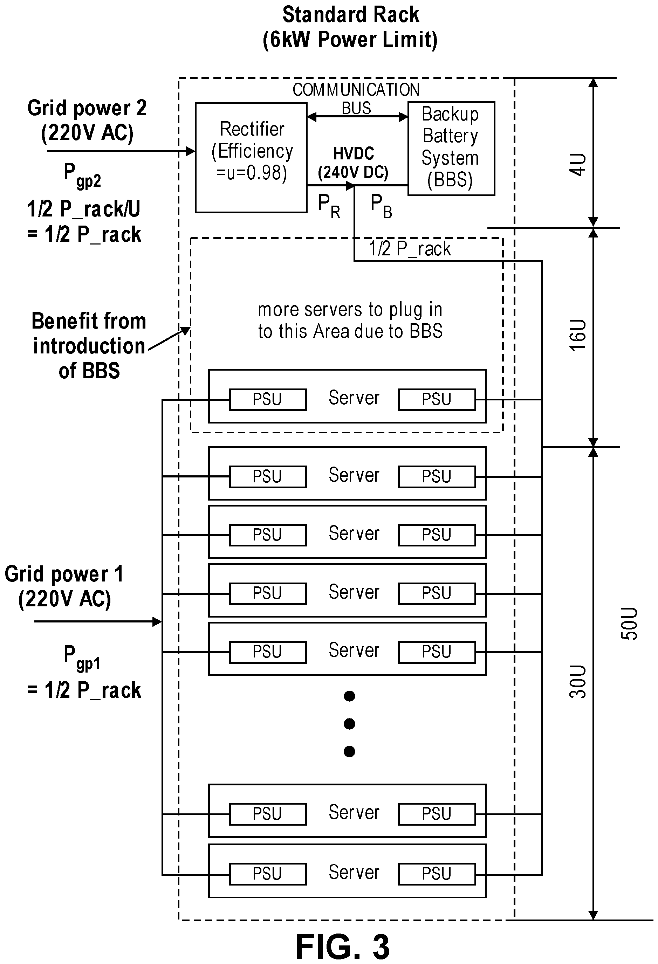

Fig. 3 shows a rack with a backup battery system (BBS), according to an embodiment of the invention. Grid Power 1 is shown as a source of AC power to the rack, which in the illustrated embodiment provides power to the power supply units (PSUs) on the left side of the servers in the rack (as seen in both Figs. 1 and 3). Similarly, Grid Power 2 is shown as a separate source of AC power to the rack, which in the illustrated embodiment provides power to the rectifier. The rectifier then provides DC power to charge up the battery backup system (BBS) and also provides DC power to the PSUs on the right side of the servers in the rack. The illustrated PSUs may be capable of operating on either AC or DC power, which allows the rectifier and BBS to be retrofitted into an existing rack without replacing the PSUs. However, other embodiments may replace some AC-only PSUs with DC-only or AC/DC PSUs.

Fig. 3 appears to show the rectifier and BBS at the top of the rack. However, other embodiments may place the rectifier and/or BBS in any convenient location. Fig. 3 also shows the rectifier and BBS taking up 4 units of rack space, leaving 16 units of rack space for additional servers and their respective PSUs beyond the quantities shown in Fig. 1. However, other embodiments may use other numbers of units for these purposes. For clarity, Fig. 3 shows only one additional server in this space, but other embodiments may have more.

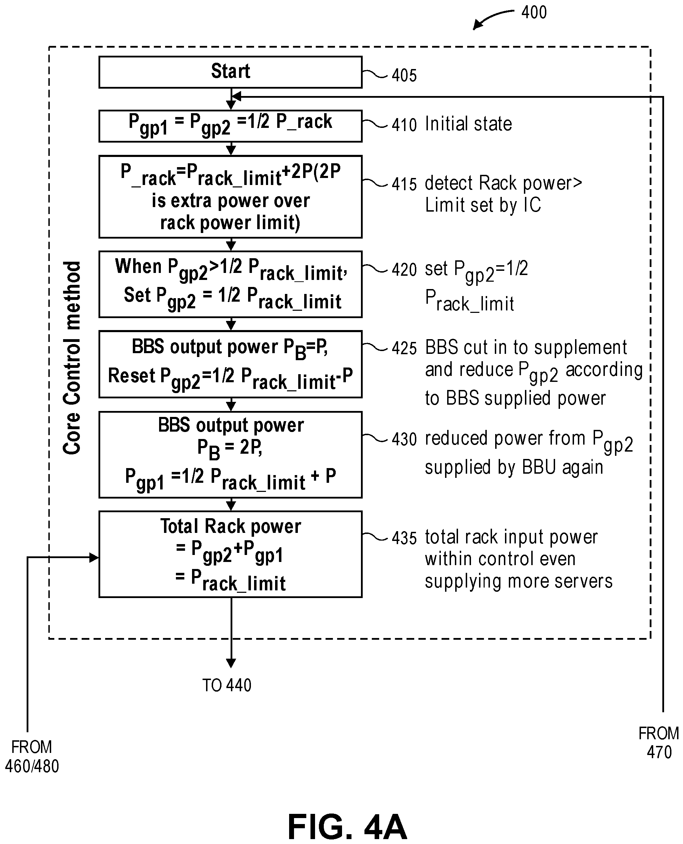

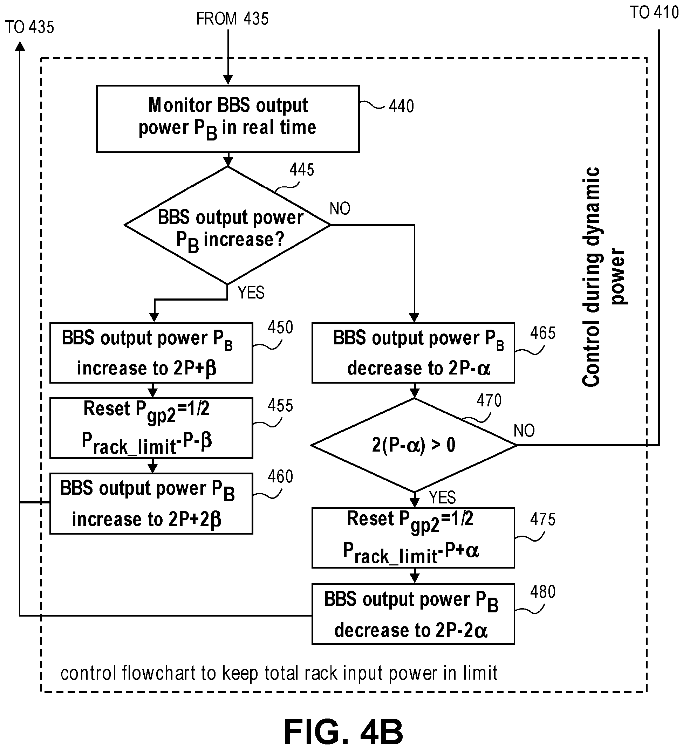

For the subsequent descriptions of Figs. 3 and 4, the following definitions may be used:
P_{gp1} - The actual power provided by Grid Power 1.
P_{gp2} - The actual power provided by Grid Power 2.
P_{R} - The output power of the rectifier.
P_{B} - The output power of the BBS.
P_{_rack} - Total input power consumed by the rack (as measured from outside the rack), including P_{gp1} + P_{gp2.}
P_{rack_limit} - Predetermined maximum input power limit set for the rack without considering the BBS output P_{B} , i.e., the maximum permitted for P_{gp1} + P_{gp2} .
P - ½ of the amount by which the power consumed by the rack (P_{_rack}) exceeds P_{rack_limit}

In some embodiments, each server will automatically balance the amount of power being drawn by its two PSUs (assuming a failure of a PSU or its power source does not prevent such balancing). Therefore, assuming no failure, P_{gp1} = ½ P_{_rack} . Similarly, P_{R} = ½ P_{_rack} under normal operating conditions when the BBS is not contributing power. If the rectifier has 100% efficiency, then P_{gp2} would also be = ½ _{P}__{rack} . Since the efficiency *u* of the rectifier may be slightly less (in this case 98%), P_{gp2} may be slightly greater than P_{R}. But for simplicity of explanation, the subsequent descriptions may assume P_{R} = P_{gp2 .} A person of ordinary skill in the art should be able to calculate how much the efficiency of the rectifier affects the descriptions that follow in this document.

In addition to the power amounts just described, BBS may provide output power P_{B} when such power is called upon by a power control module. Under normal steady state power conditions, Grid power 1 and Grid power 2 may each provide one-half of the rack power needed, as was the case for Fig. 1, with the difference in Fig. 3 being that Grid Power 2 goes through a high-efficiency rectifier first. However, when the servers need additional power for short or long term peak loads, the BBS may provide some or all of the additional power needed rather than relying on grid sources for the extra power.

Fig. 4 shows a flow diagram of a method of controlling total rack input power, according to an embodiment of the invention. The operations of flow diagram 400 may be performed by a control unit comprised of one or more processors, monitoring logic, control logic, software, firmware, and/or other modules. Due to the variety of modules and their configurations that may be used to perform these functions, and their distribution through the system, they are not shown in Fig. 4. However, in various embodiment the control module may be within the rectifier, external to the rectifier, or partly within and partly external to the rectifier.

The process starts at 405, and at initial state 410 the grid sources P_{gp1} and P_{gp2} each provide approximately ½ of the total rack power P_{_rack}. At 415, the control unit determines that the load on the rack has risen and now exceeds the rack power limit P_{rack_limit} by an amount defined here as 2P (i.e., twice the value of P). When compared to the graph of Fig. 2, P_{rack_limit} would be 8.8 kW. As a result of the determination at 415, when P_{gp2} starts exceeding ½ P_{rack_limit}, at 420 the power level from P_{gp2} may be reset to ½ P_{rack_limit}

In one embodiment, the system may contain a monitoring module (either internal or external to the rectifier) to monitor the output P_{B} of the BBS and set the rectifier to limit its output power P_{R} to the required level. In some embodiments, the rectifier may adjust its output power by adjusting its output voltage (e.g., increasing output voltage to increase output power, or decreasing output voltage to decrease output power). The BBS may then naturally adjust its own output power to supply the extra power required from downstream servers when P_{R} is reduced.

At 425, the output P_{B} of the BBS is set to P (1/2 the amount that the power demand exceeds P_{rack_limit}, per operation 415). Accordingly, P_{gp2} is reset to ½ P_{rack_limit} - P, so that the output power of the BBS increases further by P so that P_{B} reaches a value of 2P.

At 430, BBS output power P_{B} is increased again, to 2P this time, and P_{gp1} is increased to ½ P_{rack_limit} + P. At this point, P_{gp2} = ½ P_{rack_limit} - P, P_{gp1} = ½ P_{rack_limit} + P, and BBS output P₂ = 2P. Adding these together, the total power being supplied to the rack by P_{gp1} and P_{gp2} is P_{rack_limit}, as seen at 435, while the power being supplied to the servers = P_{rack_limit} + 2P. Thus the servers are getting the power needed to meet peak load demand, while the Grid Power 1 and Grid Power 2 do not exceed their design limitations, even though the rack has more servers than would be feasible in a prior art rack and the servers are drawing peak loads.

Operations 405 - 435 have described an embodiment in which the total rack power required may transition from below or at P_{rack_limit} to above P_{rack_limit}. Operations 440 - 480 describe an embodiment in which the total rack power may fluctuate dynamically between various levels which may be above or below P_{rack_limit}.

As flow diagram 400 moves from operation 435 to operation 440, output power P_{B} from the BBS is assumed to be 2P. (Remember, P was defined as ½ the amount by which P_{_rack} exceeded P_{rack_limit}). At 440, the control unit may monitor the BBS output power P_{B} in real time. If P_{B} increases, as determined at 445, then then the amount of the increase may be defined as a first quantity β, leaving P_{B} = 2P + β at 450. To offset the similar increase from P_{gp1}, at 455 P_{gp2} may be reset to ½ P_{rack_limit} - P - β. Then to offset operation 455, at 460 P_{B} may be increased to 2P + 2β. This may return the flow diagram to 435, where the total power being supplied by P_{gp1} and P_{gp2} is P_{rack_limit}, while the servers are receiving P_{rack_limit}, + the new P_{B} (which is now 2P + 2β).

The previous paragraph describes what may happen if an increase in BBS output is detected at 445. But if such an increase is not detected, flow may proceed to 465, where P_{B} may be decreased by a second quantity α, leaving P_{B} = 2P - α. At 470 it may be determined if 2(P - α ) > 0. If so, at 475 P_{gp2} may be reset to ½ P_{rack_limit} - P + α. Then BBU output power P_{B} may be decreased to 2P - 2α at 480 and flow may return to 435. At this point, total rack power P_{_rack} may = P_{gp1} and P_{gp2} = P_{rack_limit..} On the other hand, if 2(P - α ) is not > 0, the flow may return to 410, where grid power is balanced with grid sources P_{gp1} and P_{gp2} each providing approximately ½ of the total rack power P_{_rack}.

## Claims

1. A computer server rack, the computer server rack having a control unit, a first grid power source, a second grid power source, and a battery backup system, BBS, wherein the computer server rack further comprises a first power supply unit and a second power supply unit in each of multiple servers in the rack, each of said first power supply units is coupled to the first grid power source and each of said second power supply units is coupled to the BBS and to the second grid power source, and wherein each server of the multiple servers in the rack is configured to balance a power demand from the first power supply unit and a power demand from the second power supply unit, the control unit adapted to:
detect (415) that a power demand by the multiple servers in the rack exceeds a specified maximum power limit for the rack by twice a first determined amount;
set (425) a BBS output power to the first determined amount;
set (425) an output power from the second grid power source to one half the maximum power limit minus the first determined amount; and
set (430) the BBS output power to twice the first determined amount and set an output from the first grid power source to one half the maximum power limit plus the first determined amount.

2. The control unit of claim 1, further adapted to:
increase the BBS output power by a second determined amount in response to an increased power demand by the multiple servers;
set the second grid power output to said one half the maximum power limit minus the first determined amount minus the second determined amount, in response to said increased power demand; and
reset the BBS output power to twice the first determined amount plus twice the second determined amount.

3. The control unit of claim 1, further adapted to:
decrease the BBS output power by a third determined amount in response to a decreased power demand by the multiple servers;
set the first grid power output equal to the second grid power output equal to one half the total rack power, in response to determining that twice the first determined amount minus twice the third determined amount is not greater than zero;
set the second grid power output to said one half the maximum power limit minus the first determined amount plus the third determined amount, in response to determining that twice the first determined amount minus twice the third determined amount is greater than zero; and
reset the BBS output power to said twice the first determined amount minus twice the third determined amount.

4. The control unit of claim 1, wherein the computer server rack further comprises a rectifier coupled between the second grid power source and the BBS.

5. The control unit of claim 4, wherein the control unit is to monitor an output of the BBS and is to control an output of the rectifier.

6. A method of controlling power in a computer server rack the computer server rack having a first grid power source, a second grid power source, and a battery backup system, BBS, wherein the computer server rack further comprises a first power supply unit and a second power supply unit in each of multiple servers in the rack, each of said first power supply units is coupled to the first grid power source and each of said second power supply units is coupled to the BBS and to the second grid power source, comprising:
detecting (415) that a power demand by the multiple servers in the rack exceeds a specified maximum power limit for the rack by twice a first determined amount;
setting (425) an output power of the BBS to the first determined amount;
setting (425) an output power from the second grid power source to one half the maximum power limit minus the first determined amount; and
setting (430) the output power of the BBS to twice the first determined amount and setting an output power from the first grid power source to one half the maximum power limit plus the first determined amount; and
balancing a power demand from the first power supply unit and a power demand from the second power supply unit within each server of the multiple servers in the computer server rack.

7. The method of claim 6, further comprising:
increasing the output power of the BBS by a second determined amount in response to an increased power demand by the multiple servers;
setting the second grid power output to said one half the maximum power limit minus the first determined amount minus the second determined amount, in response to said increasing the power demand; and
resetting the output power of the BBS to twice the first determined amount plus twice the second determined amount.

8. The method of claim 6, further comprising:
decreasing the output power of the BBS by a third determined amount in response to a decreased power demand by the multiple servers;
setting the first grid power output equal to the second grid power output equal to one half the total rack power, in response to determining that twice the first determined amount minus twice the third determined amount is not greater than zero;
setting the second grid power output to said one half the maximum power limit minus the first determined amount plus the third determined amount, in response to determining that twice the first determined amount minus twice the third determined amount is greater than zero; and
resetting the output power of the BBS to said twice the first determined amount minus twice the third determined amount.

9. The method of claim 6, further comprising monitoring the output power of the BBS.

10. The method of claim 6, further comprising controlling an output of a rectifier coupled to the BBS.

11. A computer-readable non-transitory storage medium that contains instructions, which when executed by the control unit of the computer server rack of any of claims 1 to 5 result in performing the operations of any of method claims 6 to 10.

## Patentansprüche

1. Computerserverrack, wobei das Computerserverrack eine Steuereinheit, eine erste Netzstromquelle, eine zweite Netzstromquelle und ein Batteriesicherungssystem, BBS, aufweist, wobei das Computerserverrack weiter eine erste Leistungsversorgungseinheit und eine zweite Leistungsversorgungseinheit in jedem von mehreren Servern in dem Rack aufweist, wobei jede der ersten Leistungsversorgungseinheiten an die erste Netzstromquelle gekoppelt ist und jede der zweiten Stromversorgungseinheiten an das BBS und an die zweite Netzstromquelle gekoppelt ist und wobei jeder Server der mehreren Server in dem Rack ausgelegt ist zum Ausgleichen einer Leistungsnachfrage von der ersten Stromversorgungseinheit und einer Leistungsnachfrage von der zweiten Stromversorgungseinheit, wobei die Steuereinheit ausgelegt ist zum:
Detektieren (415), dass eine Leistungsnachfrage durch die mehreren Server in dem Rack eine spezifizierte größte Leistungsgrenze für das Rack um das Doppelte einer ersten bestimmten Menge übersteigt;
Setzen (425) einer BBS-Ausgangsleistung auf die erste bestimmte Menge;
Setzen (425) einer Ausgangsleistung von der zweiten Netzstromquelle auf eine Hälfte der größten Leistungsgrenze minus der ersten bestimmten Menge; und
Setzen (430) der BBS-Ausgangsleistung auf das Doppelte der ersten bestimmten Menge und Setzen eines Ausgangs von der ersten Netzstromquelle auf eine Hälfte der größten Leistungsgrenze plus die erste bestimmte Menge.

2. Steuereinheit nach Anspruch 1, weiter ausgelegt zum:
Erhöhen der BBS-Ausgangsleistung um eine zweite bestimmte Menge als Reaktion auf eine vergrößerte Leistungsnachfrage durch die mehreren Server;
Setzen des zweiten Netzstromausgangs auf die eine Hälfte der größten Leistungsgrenze minus der ersten bestimmten Menge minus der zweiten bestimmten Menge als Reaktion auf die erhöhte Leistungsnachfrage; und
Zurücksetzen der BBS-Ausgangsleistung auf das Doppelte der ersten bestimmten Menge plus dem Doppelten der zweiten bestimmten Menge.

3. Steuereinheit nach Anspruch 1, weiter ausgelegt zum:
Verringern der BBS-Ausgangsleistung um eine dritte bestimmte Menge als Reaktion auf eine verringerte Leistungsnachfrage durch die mehreren Server;
Setzen der ersten Netzleistungsausgabe gleich der zweiten Netzleistungsausgabe gleich einer Hälfte der Gesamtrackleistung als Reaktion auf das Bestimmen, dass das Doppelte der ersten bestimmten Menge minus dem Doppelten der dritten bestimmten Menge nicht größer als null ist;
Setzen der zweiten Netzleistungsausgabe auf die eine Hälfte der größten Leistungsgrenze minus der ersten bestimmten Menge plus der dritten bestimmten Menge als Reaktion auf das Bestimmen, dass das Doppelte der ersten bestimmten Menge minus dem Doppelten der dritten bestimmten Menge größer als null ist; und
Zurücksetzen der BBS-Ausgangsleistung auf das Doppelte der ersten bestimmten Menge minus dem Doppelten der dritten bestimmten Menge.

4. Steuereinheit nach Anspruch 1, wobei das Computerserverrack weiter einen Gleichrichter umfasst, der zwischen die zweite Netzstromquelle und das BBS gekoppelt ist.

5. Steuereinheit nach Anspruch 4, wobei die Steuereinheit einen Ausgang des BBS überwachen soll und einen Ausgang des Gleichrichters steuern soll.

6. Verfahren zum Steuern von Leistung in einem Computerserverrack, wobei das Computerserverrack eine erste Netzstromquelle, eine zweite Netzstromquelle und ein Batteriesicherungssystem, BBS, aufweist, wobei das Computerserverrack weiter eine erste Leistungsversorgungseinheit und eine zweite Leistungsversorgungseinheit in jedem von mehreren Servern in dem Rack aufweist, wobei jede der ersten Leistungsversorgungseinheiten an die erste Netzstromquelle gekoppelt ist und jede der zweiten Stromversorgungseinheiten an das BBS und an die zweite Netzstromquelle gekoppelt ist, umfassend:
Detektieren (415), dass eine Leistungsnachfrage durch die mehreren Server in dem Rack eine spezifizierte größte Leistungsgrenze für das Rack um das Doppelte einer ersten bestimmten Menge übersteigt;
Setzen (425) einer Ausgangsleistung des BBS auf die erste bestimmte Menge;
Setzen (425) einer Ausgangsleistung von der zweiten Netzstromquelle auf eine Hälfte der größten Leistungsgrenze minus der ersten bestimmten Menge; und
Setzen (430) der Ausgangsleistung des BBS auf das Doppelte der ersten bestimmten Menge und Setzen einer Ausgangsleistung von der ersten Netzstromquelle auf eine Hälfte der größten Leistungsgrenze plus die erste bestimmte Menge; und
Ausgleichen einer Leistungsnachfrage von der ersten Stromversorgungseinheit und einer Leistungsnachfrage von der zweiten Stromversorgungseinheit innerhalb jedes Servers der mehreren Server in dem Computerserverrack.

7. Verfahren nach Anspruch 6, weiter umfassend:
Erhöhen der Ausgangsleistung des BBS um eine zweite bestimmte Menge als Reaktion auf eine vergrößerte Leistungsnachfrage durch die mehreren Server;
Setzen des zweiten Netzstromausgangs auf die eine Hälfte der größten Leistungsgrenze minus der ersten bestimmten Menge minus der zweiten bestimmten Menge als Reaktion auf die erhöhte Leistungsnachfrage; und
Zurücksetzen der Ausgangsleistung des BBS auf das Doppelte der ersten bestimmten Menge plus dem Doppelten der zweiten bestimmten Menge.

8. Verfahren nach Anspruch 6, weiter umfassend:
Verringern der Ausgangsleistung des BBS um eine dritte bestimmte Menge als Reaktion auf eine verringerte Leistungsnachfrage durch die mehreren Server;
Setzen der ersten Netzleistungsausgabe gleich der zweiten Netzleistungsausgabe gleich einer Hälfte der Gesamtrackleistung als Reaktion auf das Bestimmen, dass das Doppelte der ersten bestimmten Menge minus dem Doppelten der dritten bestimmten Menge nicht größer als null ist;
Setzen der zweiten Netzleistungsausgabe auf die eine Hälfte der größten Leistungsgrenze minus der ersten bestimmten Menge plus der dritten bestimmten Menge als Reaktion auf das Bestimmen, dass das Doppelte der ersten bestimmten Menge minus dem Doppelten der dritten bestimmten Menge größer als null ist; und
Zurücksetzen der Ausgangsleistung des BBS auf das Doppelte der ersten bestimmten Menge minus dem Doppelten der dritten bestimmten Menge.

9. Verfahren nach Anspruch 6, weiter umfassend das Überwachen der Ausgangsleistung des BBS.

10. Verfahren nach Anspruch 6, weiter umfassend das Steuern eines Ausgangs eines an das BBS gekoppelten Gleichrichters.

11. Computerlesbares nichtvorrübergehendes Ablagemedium, das Anweisungen enthält, die bei Ausführung durch die Steuereinheit des Computerserverracks nach einem der Ansprüche 1 bis 5 zu dem Durchführen der Operationen nach einem der Verfahrensansprüche 6 bis 10 führt.

## Revendications

1. Support de serveurs informatiques, le support de serveurs informatiques ayant une unité de commande, une première source d'alimentation réseau, une deuxième source d'alimentation réseau, et un système de batterie de secours, BBS, le support de serveurs informatiques comprenant en outre une première unité d'alimentation électrique et une deuxième unité d'alimentation électrique dans chacun de multiples serveurs dans le support, chacune desdites premières unités d'alimentation électrique étant couplée à la première source d'alimentation réseau et chacune desdites deuxièmes unités d'alimentation électrique étant couplée au BBS et à la deuxième source d'alimentation réseau, et chaque serveur des multiples serveurs dans le support étant configuré pour équilibrer une demande de puissance provenant de la première unité d'alimentation électrique et une demande de puissance provenant de la deuxième unité d'alimentation électrique, l'unité de commande étant conçue pour :
détecter (415) qu'une demande de puissance par les multiples serveurs dans le support excède une limite de puissance maximum spécifiée pour le support de deux fois une première quantité déterminée ;
définir (425) une puissance de sortie de BBS à la première quantité déterminée ;
définir (425) une puissance de sortie provenant de la deuxième source d'alimentation réseau à une moitié de la limite de puissance maximum moins la première quantité déterminée ; et
définir (430) la puissance de sortie de BBS à deux fois la première quantité déterminée et définir une sortie provenant de la première source d'alimentation réseau à une moitié de la limite de puissance maximum plus la première quantité déterminée.

2. Unité de commande selon la revendication 1, conçue en outre pour :
augmenter la puissance de sortie de BBS d'une deuxième quantité déterminée en réponse à une demande de puissance augmentée par les multiples serveurs ;
définir la deuxième sortie d'alimentation réseau à ladite moitié de la limite de puissance maximum moins la première quantité déterminée moins la deuxième quantité déterminée, en réponse à ladite demande de puissance augmentée ; et
réinitialiser la puissance de sortie de BBS à deux fois la première quantité déterminée plus deux fois la deuxième quantité déterminée.

3. Unité de commande selon la revendication 1, conçue en outre pour :
diminuer la puissance de sortie de BBS d'une troisième quantité déterminée en réponse à une demande de puissance diminuée par les multiples serveurs ;
définir la première sortie d'alimentation réseau comme égale à la deuxième sortie d'alimentation réseau égale à une moitié de la puissance de support totale, en réponse à la détermination que deux fois la première quantité déterminée moins deux fois la troisième quantité déterminée n'est pas supérieur à zéro ;
définir la deuxième sortie d'alimentation réseau à ladite moitié de la limite de puissance maximum moins la première quantité déterminée plus la troisième quantité déterminée, en réponse à la détermination que deux fois la première quantité déterminée moins deux fois la troisième quantité déterminée est supérieur à zéro ; et
réinitialiser la puissance de sortie de BBS à deux fois la première quantité déterminée moins deux fois la troisième quantité déterminée.

4. Unité de commande selon la revendication 1, le support de serveurs informatiques comprenant en outre un redresseur couplé entre la deuxième source d'alimentation réseau et le BBS.

5. Unité de commande selon la revendication 4, l'unité de commande étant destinée à surveiller une sortie du BBS et étant destinée à commander une sortie du redresseur.

6. Procédé de commande de puissance dans un support de serveurs informatiques, le support de serveurs informatiques ayant une première source d'alimentation réseau, une deuxième source d'alimentation réseau, et un système de batterie de secours, BBS, le support de serveurs informatiques comprenant en outre une première unité d'alimentation électrique et une deuxième unité d'alimentation électrique dans chacun de multiples serveurs dans le support, chacune desdites premières unités d'alimentation électrique étant couplée à la première source d'alimentation réseau et chacune desdites deuxièmes unités d'alimentation électrique étant couplée au BBS et à la deuxième source d'alimentation réseau, comprenant :
la détection (415) qu'une demande de puissance par les multiples serveurs dans le support excède une limite de puissance maximum spécifiée pour le support de deux fois une première quantité déterminée ;
la définition (425) d'une puissance de sortie du BBS à la première quantité déterminée ;
la définition (425) d'une puissance de sortie provenant de la deuxième source d'alimentation réseau à une moitié de la limite de puissance maximum moins la première quantité déterminée ; et
la définition (430) de la puissance de sortie du BBS à deux fois la première quantité déterminée et la définition d'une puissance de sortie provenant de la première source d'alimentation réseau à une moitié de la limite de puissance maximum plus la première quantité déterminée ; et
l'équilibrage d'une demande de puissance provenant de la première unité d'alimentation électrique et d'une demande de puissance provenant de la deuxième unité d'alimentation électrique dans chaque serveur des multiples serveurs dans le support de serveurs informatiques.

7. Procédé selon la revendication 6, comprenant en outre :
l'augmentation de la puissance de sortie du BBS d'une deuxième quantité déterminée en réponse à une demande de puissance augmentée par les multiples serveurs ;
la définition de la deuxième sortie d'alimentation réseau à ladite moitié de la limite de puissance maximum moins la première quantité déterminée moins la deuxième quantité déterminée, en réponse à ladite augmentation de la demande de puissance ; et
la réinitialisation de la puissance de sortie du BBS à deux fois la première quantité déterminée plus deux fois la deuxième quantité déterminée.

8. Procédé selon la revendication 6, comprenant en outre :
la diminution de la puissance de sortie du BBS d'une troisième quantité déterminée en réponse à une demande de puissance diminuée par les multiples serveurs ;
la définition de la première sortie d'alimentation réseau comme égale à la deuxième sortie d'alimentation réseau égale à une moitié de la puissance de support totale, en réponse à la détermination que deux fois la première quantité déterminée moins deux fois la troisième quantité déterminée n'est pas supérieur à zéro ;
la définition de la deuxième sortie d'alimentation réseau à ladite moitié de la limite de puissance maximum moins la première quantité déterminée plus la troisième quantité déterminée, en réponse à la détermination que deux fois la première quantité déterminée moins deux fois la troisième quantité déterminée est supérieur à zéro ; et
la réinitialisation de la puissance de sortie du BBS à deux fois la première quantité déterminée moins deux fois la troisième quantité déterminée.

9. Procédé selon la revendication 6, comprenant en outre la surveillance de la puissance de sortie du BBS.

10. Procédé selon la revendication 6, comprenant en outre la commande d'une sortie d'un redresseur couplé au BBS.

11. Support de stockage non transitoire lisible par ordinateur qui contient des instructions, qui, lorsqu'elles sont exécutées par l'unité de commande du support de serveurs informatiques selon l'une quelconque des revendications 1 à 5, résultent en la réalisation des opérations de l'une quelconque des revendications de procédé 6 à 10.
